# EUROPEAN PATENT SPECIFICATION

(11) **EP 4 256 592 B1**
(45) Date of publication and mention of the grant of the patent: **21.10.2026**
(21) Application number: 21848499.6
(22) Date of filing: 02.12.2021
(51) Int. Cl.: G21D 3/00, B23K 9/028, B23K 9/095

(54) **SYSTEMS AND METHODS FOR WIRELESS REMOTE CONTROL OF AUTOMATED EQUIPMENT**
SYSTEME UND VERFAHREN ZUR DRAHTLOSEN FERNSTEUERUNG VON AUTOMATISIERTEN GERÄTEN
SYSTÈMES ET PROCÉDÉS DE COMMANDE À DISTANCE SANS FIL D'ÉQUIPEMENTS AUTOMATISÉS

(30) Priority: 02.12.2020 US 202017109252
(43) Date of publication of application: 11.10.2023
(73) Proprietor: Westinghouse Electric Company LLC, Cranberry Township, PA 16066 (US)
(72) Inventor: HARKAWAY, John S., Lake Bluff, Illinois 60044 (US); AMODEO, Joseph P., Oakbrook Terrace, Illinois 60181 (US)
(74) Representative: Novagraaf Group
(86) International application number: PCT/US2021/072713
(87) International publication number: WO 2022/120368

(56) References cited:
- EP-B1- 3 131 340
- JP-A- 2019 000 910
- US-A1- 2006 207 980
- US-A1- 2014 014 637
- US-A1- 2016 189 811
- US-A1- 2016 260 261
- US-A1- 2017 232 615
- US-A1- 2021 046 569
- US-B2- 7 714 895

## Description

### CROSS-REFERENCE TO RELATED APPLICATION

This application claims the benefit of U.S. Non-Provisional Application Serial No. 17/109,252 filed December 2, 2020, entitled "SYSTEMS AND METHODS FOR WIRELESS REMOTE CONTROL OF AUTOMATED EQUIPMENT".

### BACKGROUND

In industrial environments, access to equipment requiring maintenance or repair is often limited. For example, human access to certain locations within a plant may be restricted due to hazards such as radiation or other contaminants. Similarly, it may be impossible for a human to access and work on certain plant equipment due to space or clearance restrictions.

Nuclear plants comprise a containment building where human access is especially restricted. This is because the containment building houses what are commonly referred to as the "nuclear island" components and is where the hazardous radiological elements of the nuclear plant are located. These components include, for example, the nuclear reactor. As the nuclear fuel used in the nuclear reactor has reached its purposeful life, it is removed from the reactor and moved to a spent fuel pool located within the containment building. Upon reaching a certain capacity, regulations and standard practice require the spent fuel pool to be emptied of spent nuclear fuel that has accumulated. Timely removal of the spent fuel is critical because it ensures that the spent fuel pool has excess capacity in case nuclear fuel needs to quickly be removed from the reactor.

To safely and efficiently remove the spent fuel from the containment building, it is placed in a specially-designed containment canister. And to ensure radiation from the spent fuel is properly contained, it is sealed by welding a lid to the top of the canister. However, this welding process is difficult because human access to the containment building is restricted. Moreover, as discussed above, the spent fuel emits radiation that is unsafe for plant personnel.

It is the goal of the present disclosure to provide systems and methods that offer a safer, more effective, and lower cost way to allow for the human assisted control of automated equipment in restricted locations, including human assisted control of automated welding processes at nuclear facilities, using wireless communications.
US 2017/0232615 A1 discloses a remote controlled welder with a multi-axis robot arm, video cameras, sensors and a specialized control station that allows an operator to perform flood-fill welding operations at a remote location. The operator accesses the control unit using a GUI and mouse, keyboard, joystick, or other custom controls, and observes the piece via the cameras placed in the welding station via a feed displayed on display(s).
US 2016/0260261 A1 discloses a sensor assisted head mounted display for welding, with an optical sensor, an augmented reality controller, a graphics processing unit, and a semitransparent display. The optical sensor collects an image of a weld environment. The augmented reality controller determines a simulated object to be presented in a field of view, a position in the field of view, and a perspective of the simulated object in the field of view. The graphics processing unit renders the simulated object based on the perspective to represent the simulated object being present in the field of view and in the weld environment.
US 2016/0189811 A1 discloses a nuclear reactor instrumentation system with a backup power source, a wireless transmitter, and system sensors configured to identify a loss of normal power to the instrumentation system and cause power to be provided from the backup power source to the wireless transmitter in order to transmit data from sensors to a remote location.

### SUMMARY

The following summary is provided to facilitate an understanding of some of the innovative features unique to the aspects disclosed herein, and is not intended to be a full description. A full appreciation of the various aspects can be gained by taking the entire specification, claims, and abstract as a whole.

In various aspects, a system for the remote control of automated equipment is disclosed. The system includes: automated equipment configured to execute a process in a nuclear containment building by performing operations based on predetermined programming; a first cellular router communicatively coupled to the automated equipment, wherein the first cellular router is located outside the nuclear containment building; a second cellular router configured to communicate with the first cellular router using a cellular network, wherein the second cellular router is located remotely from the first cellular router; an operator console communicatively coupled to the second cellular router, the operator console comprising a human machine interface (HMI) that enables an operator to modify the operations of the automated equipment in real time by changing operating parameters of the predetermined programming, wherein the changing the of the operating parameters is communicated between the operator console and the automated equipment; wherein the nuclear containment building comprises a structure that prevents transmission of a wireless signal from within the nuclear containment building to outside the nuclear containment building.

In various aspects, a system for the remote control of a robot weld head is disclosed. The system includes: a robot weld head configured to weld a lid on a spent fuel canister located within a containment building of a nuclear plant by performing welding operations based on predetermined programming; a first cellular router communicatively coupled to the robot weld head, wherein the first cellular router is located outside of the containment building; a second cellular router configured to communicate with the first cellular router using a cellular network, wherein the second cellular router is located remotely from the first cellular router; an operator console communicatively coupled to the second cellular router, the operator console comprising a human machine interface (HMI) that enables an operator to modify the welding operations of the robot weld head in real time by changing operating parameters of the predetermined programming, wherein the changing the of the operating parameters is communicated between the operator console and the robot weld head; wherein a wireless signal cannot be transmitted from within the containment building to outside of the containment building.

In various aspects, a method for the remote control of automated equipment is disclosed. The method includes: executing a process in a nuclear containment building using automated equipment configured to perform operations based on predetermined programming; communicating operating parameters of the predetermined programming between an operating console and the automated equipment, the operating console comprising a Human Machine Interface (HMI); wherein a first cellular router is communicatively coupled to the automated equipment, the first cellular router located outside the nuclear containment building; wherein a second cellular router is communicatively coupled to the operating console, the second cellular router located remotely from the first cellular router; wherein the nuclear containment building comprises a structure that prevents transmission of a wireless signal from within the nuclear containment building to outside the nuclear containment building; and wherein the first cellular router is configured to communicate with the second cellular router using a cellular network; and modifying, by an operator using the HMI, the operations of the automated equipment in real time by changing the operating parameters that are communicated between the operator console and the automated equipment.

In various aspects, a method for the remote control of a robot weld head is disclosed. The method includes: welding a lid on a spent fuel canister located within a containment building of a nuclear plan using a robot weld head configured to perform welding operations based on predetermined programming; communicating operating parameters of the predetermined programming between an operating console and the robot weld head, the operating console comprising an HMI; wherein a first cellular router is communicatively coupled to the robot weld head, the first cellular router located outside of the containment building; wherein a second cellular router is communicatively coupled to the operating console, the second cellular router located remotely from the first cellular router; wherein a wireless signal cannot be transmitted from within the containment building to outside of the containment building; and wherein the first cellular router is configured to communicate with the second cellular router using a cellular network; and modifying, by an operator using the HMI, the welding operations of the robot weld head in real time by changing the operating parameters that are communicated between the operator console and the robot weld head.

These and other objects, features, and characteristics of the present disclosure, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the present disclosure.

### BRIEF DESCRIPTION OF THE DRAWINGS

Various features of the aspects described herein are set forth with particularity in the appended claims. The various aspects, however, both as to organization and methods of operation, together with advantages thereof, may be understood in accordance with the following description taken in conjunction with the accompanying drawings as follows:
FIG. 1 illustrates a perspective view of a spent fuel canister and a robot weld head attached to a fuel canister lid, in accordance with at least one non-limiting aspect of the present disclosure.
FIG. 2A and FIG. 2B illustrate a block diagram of a work station configured for wireless control of automated equipment, in accordance with at least one non-limiting aspect of the present disclosure.
FIG. 3A and FIG. 3B illustrate a block diagram of an operator station configured for wireless control of automated equipment, in accordance with at least one non-limiting aspect of the present disclosure.

Corresponding reference characters indicate corresponding parts throughout the several views. The exemplifications set out herein illustrate various aspects of the present disclosure, in one form, and such exemplifications are not to be construed as limiting the scope of the present disclosure in any manner.

### DETAILED DESCRIPTION

Numerous specific details are set forth to provide a thorough understanding of the overall structure, function, manufacture, and use of the aspects as described in the disclosure and illustrated in the accompanying drawings. Well-known operations, components, and elements have not been described in detail so as not to obscure the aspects described in the specification. The reader will understand that the aspects described and illustrated herein are non-limiting examples, and thus it can be appreciated that the specific structural and functional details disclosed herein may be representative and illustrative. Variations and changes thereto may be made without departing from the scope of the claims.

Before explaining various aspects of the present disclosure in detail, it should be noted that the illustrative examples are not limited in application or use to the details of construction and arrangement of parts illustrated in the accompanying drawings and description. The illustrative examples may be implemented or incorporated in other aspects, variations, and modifications, and may be practiced or carried out in various ways. Further, unless otherwise indicated, the terms and expressions employed herein have been chosen for the purpose of describing the illustrative examples for the convenience of the reader and are not for the purpose of limitation thereof. Also, it will be appreciated that one or more of the following-described aspects, expressions of aspects, and/or examples, can be combined with any one or more of the other following-described aspects, expressions of aspects, and/or examples.

The present disclosure is directed to systems and methods for the human assisted control of automated equipment in restricted locations, including human assisted control of automated welding processes at nuclear facilities, using wireless communications. Automated equipment is often used in industrial environments to perform maintenance or repair operations where access is limited due to safety or clearance restrictions. For example, access to the containment building of a nuclear power plant is restricted due to hazards such as radiation and other contaminants. Although operations occurring within these restricted locations may be performed using automated equipment carrying out a predetermined program, human intervention is often required to control and adjust critical aspects of the otherwise automated process. Enabling this human control is difficult because transmitting wireless signals into and out of the restricted location may not be possible. For example, the walls of a nuclear containment building may be constructed of 1.83 m (6 ft.) thick cement thereby preventing the transmission of wireless signals. Accordingly, there is a need for systems and methods that enable the human assisted control of automated equipment in restricted locations using wireless communications.

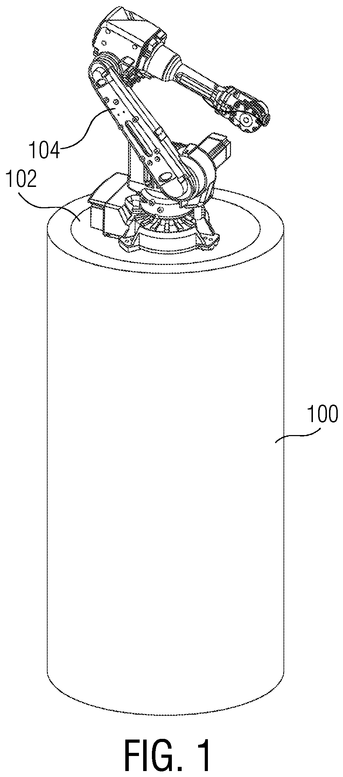

One such automated process requiring human assisted control is welding the lid on a spent nuclear fuel canister using an automated robot weld head. To perform this process, an automated robot welding arm is mounted to the lid of the spent fuel canister to perform the welding process. For example, FIG. 1 illustrates a spent fuel canister 100 and a canister lid 102. Mounted on canister lid 102 is a robot weld head 104 that welds canister lid 102 to the top of spent fuel canister 100. Although the use of an automated welding robot allows for the canister to be sealed without a human being present in the containment area, human intervention is still required to make critical decisions throughout the welding process. Specifically, a human operator is needed to monitor weld puddle characteristics, sidewall fusion, and welding arc characteristics and to make on-the-fly adjustments as necessary. These adjustments may be implemented, for example, by manipulating the weld wire (manipulating filler wire entry into the weld puddle) to achieve the desired weld puddle characteristics and modifying the tungsten positioning in order to maintain the desired arc penetration and weld deposition. The operating parameter changes that are needed to modify these welding operations cannot be predetermined and require control and correction based on live human monitoring in order to meet canister lid welding requirements.

The canister lid welding process is further complicated because communications between the human operator control station and the robot weld arm typically require a hard-wired connection. This is because wireless communication signals cannot pass through the thick, cement walls of the containment building.

Another difficult aspect of the canister lid welding process is that the human-assisted control of the robot welding arm must be performed by a skilled operator. And because communication between the robot welding arm and the operator is limited to a hard-wired connection, the skilled operator charged with welding the canister lid must be physically present at the plant location. This creates cost and personnel issues because the number of skilled operators available may be limited. For example, companies may not have sufficient manpower to execute multiple spent fuel removal jobs occurring simultaneously at multiple plant locations. As a result, companies are faced with increased costs associated with frequent training of new operators. Additionally, deploying multiple skilled operators to each physical plant location necessitates additional travel and living expenses.

By enabling the human assisted control of automated equipment in restricted locations using wireless communications, the various systems and methods disclosed herein beneficially improve the safety, cost effectiveness, and efficiency of equipment operations. For example, enabling the human assisted control of spent fuel canister welding operations using wireless communications beneficially reduces the risk of injury to human operators by enabling them to work from outside of the hazardous containment area. Specifically, operators can make adjustments to critical welding parameters requiring human oversight without being exposed to radiation and other contaminants. Embodiments of the present disclosure also improve safety by reducing operator fatigue associated with working in restricted or hazardous locations.

Moreover, there are numerous cost saving benefits associated with enabling the remote control of automated equipment using wireless technology. For example, because operators are not required to be physically located at the job location, they may work out of centralized locations. This beneficially enables a team of skilled operators in a single location to remotely control equipment at multiple jobsites. As a result, the number of workers required at each jobsite is minimized and overhead costs associated with travel and living expenses are reduced. Aspects of the present disclosure also enable operators to work from a home office.

Allowing operators to control automated equipment remotely also beneficially reduces training costs. For example, skilled operators are required to control the spent nuclear fuel canister welding process. The systems and methods disclosed herein avoid costs associated with training new skilled operators who would otherwise be needed to execute multiple spent fuel removal jobs occurring simultaneously at multiple plant locations. Further, aspects of the present disclosure enable seasoned welders to continue to weld by avoiding strenuous travel requirements.

Current aspects of the present disclosure also beneficially improve the efficiency of automated processes in several respects. For example, by enabling automated processes occurring in restricted locations to be controlled remotely, operators can adjust and manipulate these processes in "real time" from any location. Additionally, operators can download operating parameters, schedules, error logs, and diagnostic information which enables remote troubleshooting. The present disclosure also allows the software controlling the automated processes to be updated and customized remotely without requiring a subject matter expert to be physically present at the equipment location. Efficiency is further improved because the same set of skilled operators are able to monitor operations at multiple jobsites from a single location, thereby enhancing work quality and consistency.

Referring to FIG. 1, a perspective view of a spent fuel canister 100 is depicted in accordance with at least one non-limiting aspect of the present disclosure. As nuclear fuel used in a nuclear reactor reaches the end of its purposeful life it is moved to a spent fuel pool. Both the nuclear reactor and the spent fuel pool are housed in the containment building of the nuclear plant. As the spent fuel pool reaches its maximum capacity, spent nuclear fuel is transported outside of the containment building by placing the spent nuclear fuel within spent fuel canister 100.

In further reference to FIG. 1, canister lid 102 is used to cap the spent fuel canister 100 and safely prevent radiation emitted by the spent nuclear fuel from escaping. A seal is created by welding canister lid 102 to spent fuel canister 100 using robot weld head 104. Specifically, robot weld head 104 performs various welding operations such as: positioning and moving the robot arm, feeding and positioning welding (filler) wire, and positioning the tungsten that controls the weld arc. The welding operations performed by robot weld head 100 may be automated based on predetermined programming executed by a robot controller and/or programmable logic controller. Although these operations are automated, human intervention is required to ensure that the spent fuel canister is safely sealed. For example, human intuition and experience is needed to monitor the weld puddle and sidewall fusion and to make necessary adjustments to parameters controlling the filler wire positioning and feed rate. Similarly, human intuition and experience is needed to monitor the weld arc and make necessary adjustments to parameters controlling tungsten positioning in order to ensure proper weld penetration and deposition. However, human control of these operations is difficult because access to the containment building is restricted because of its hazardous radiological environment.

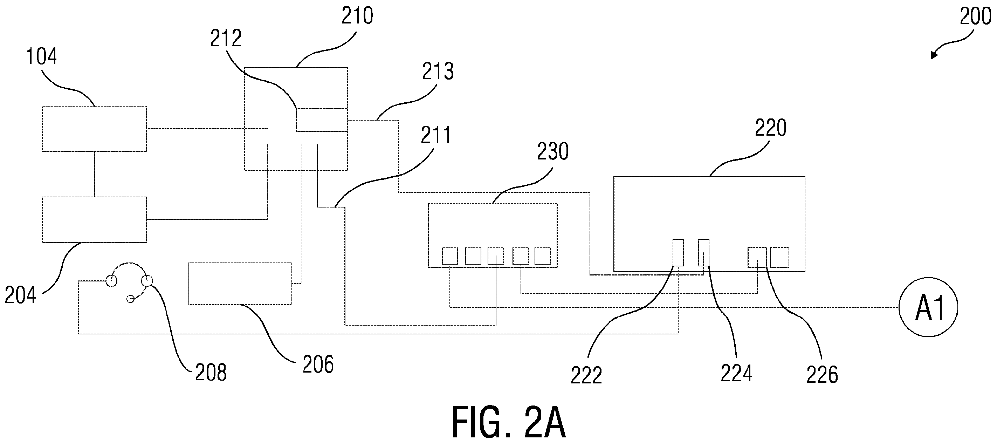

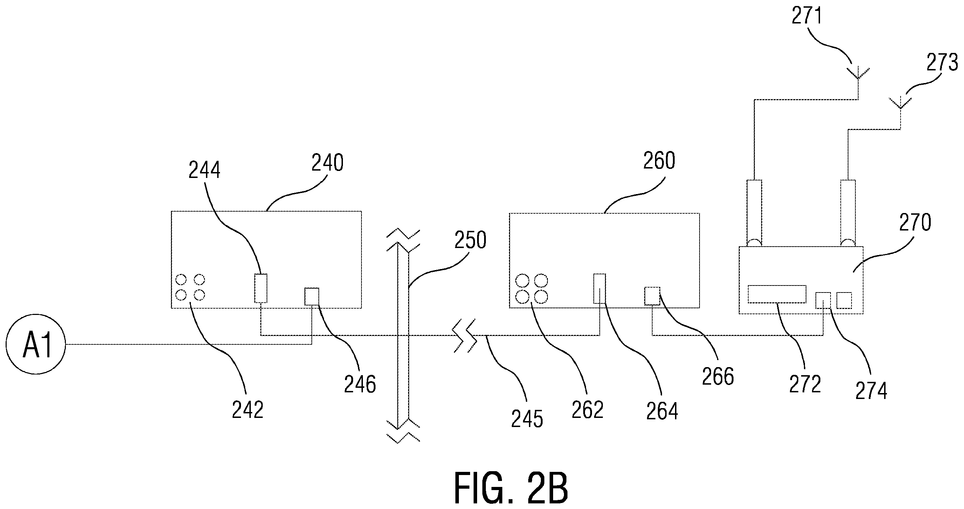

Referring now to FIG. 2A and FIG. 2B, a block diagram of work station 200 configured for wireless control of automated equipment is depicted in accordance with at least one non-limiting aspect of the present disclosure. FIG. 2A and 2B are intended to be viewed together. FIG. 2A joins with FIG. 2B as indicated by connection point A1. First referring to FIG. 2A, work station 200 includes robot weld head 104. As described above, robot weld head 104 may be configured to execute a welding process based on predetermined programming. This predetermined programming may be stored within and/or executed by a robot controller 204 that is communicatively coupled to robot weld head 104. Work station 200 further includes welding power supply 206. Welding power supply 206 may be computer controlled and configured to regulate the power supplied to robot weld head 104.

In other embodiments of the present disclosure, work station 200 may include automated equipment in place of robot weld head 104. For example, the systems and processes described herein may be applied to control automated equipment used for industrial processes such as welding, painting, assembly, material handling, pick and place, packaging, labeling, palletizing, product inspection, testing, and other processes that use a robotic arm to perform autonomous tasks. The systems and processes described herein beneficially enable the human assisted wireless remote control of these processes when performed in restricted areas.

Returning to FIG. 2A, work station 200 further includes programmable logic controller (PLC) 210. PLC 210 is configured to enable communication of robot weld head 104, robot controller 202, and welding power supply 206 with other components of work station 200 via ethernet. For example PLC 210 may include various input and output channels associated with different components of robot weld heat 104, robot controller 204, and welding power supply 206. Using these input and output channels, PLC 210 is able to both send signals controlling the operation of robot weld head 104 as well as receive signals related to the operational status of robot weld head 104. PLC 210 translates these signals to an Ethernet-based protocol for communication with other components of work station 200 via Ethernet cable 211. PLC 210 may also be coupled to welding power supply 206 and be configured to provide power to robot weld head 104.

In addition to the various input and output signals communicated between robot weld head 104 and PLC 210, robot weld head 104 may also communicate one or more video signals to PLC 210. In various embodiments, robot weld head 104 may include one or more cameras configured to monitor the weld process and generate a video signal based on the captured images. For example, it may be desirable to have one camera monitoring the leading edge of the weld puddle and one camera monitoring the trailing edge of the weld puddle. Live video based on these cameras enable a skilled operator to, for example, monitor the weld puddle, sidewall fusion, filler wire entry position and speed, and/or arc characteristics related to the penetration and deposition of the weld. Further, based on the live video, a skilled operator may, for example, make critical adjustments to parameters controlling the filler wire feed rate, filler wire positioning, tungsten positioning, and/or the speed and positioning of the weld arm in order to correct and improve the quality of the weld and to reduce the risk of defect.

In various embodiments of the present disclosure, the one or more cameras used to monitor the weld process may use arc-filtering technology to allow for a clear view the weld puddle without significant obstruction by the weld arc. To accomplish this, the one or more cameras may filter out light with a frequency matching the frequency of light emitted by the weld arc. By generating a high-resolution, "real time" image, the operator is beneficially able to make informed decisions related to controlling operating parameters of the automated equipment. The term "real time" as it is used in the present disclosure generally describes the ability to view or perceive operations and operating parameters of the automated equipment instantaneously, nearly instantaneously, or with low latency. Displaying real time video is critical for allowing the operator to view adjustments he or she is making to the operation of the automated equipment while they are being implemented. For example, by displaying this real time video for the operator, the operator is beneficially able to monitor the weld puddle, weld arc, and/or the position of the robot arm and make instantaneous or nearly instantaneous adjustments. As described above, in other embodiments of the present disclosure, work station 200 may include alternate automated equipment in place of robot weld head 104. This alternate equipment may similarly include one or more cameras that generate a signal that is transmitted to PLC 210.

Referring again to FIG. 2A, PLC 210 receives the video signal from each of the one or more cameras and, via a video switcher 212, transmits the video signal to video encoder 220. The video signal may be transmitted from video switcher 212 to video encoder 220 via cable 213 using a serial digital interface (SDI) format and is received by video encoder 220 at SDI input 224. Work station 202 may further include a headset 208 that captures audio related to the automated process and generates an audio signal that is transmitted directly to audio connection 222 of video encoder 220. Additionally, headset 208 may include both a microphone and speakers that are configured to be worn by an operator located at the work station 200 location. Video encoder 220 receives the video signal from video switcher 212 and/or the audio signal from headset 208 and, without loss of quality, converts these signals to be transmitted to other components of work station 200 via LAN connection 226 using an Ethernet-based protocol.

Work station 200 further includes LAN router 230 which is communicatively coupled to both PCL 210 and video encoder 220. LAN router 230 is configured to route communication between different components of work station 200 by detecting each component's individual IP address. LAN router 230 may be implemented using an UNMS EdgeRouter or similar Ethernet router technology. In the embodiment disclosed in FIG. 2, LAN router 230 is configured to route Ethernet signals from PLC 210 and video encoder 220 to fiber optic receiver 240.

Referring now to FIG. 2B, fiber optic receiver 240 is configured to accept Ethernet signals from LAN router 230 via Ethernet connection 246 and transmit those signals from single mode connection 244 via single mode fiber 245 to fiber optic transmitter 260. Fiber optic transmitter may also include video input 262. The fiber optic connection between fiber optic receiver 240 and fiber optic transmitter beneficially enables communication from within the restricted area of an industrial environment to outside of the restricted area without the need for wireless communication. For example, FIG. 2 depicts PLC 210, video encoder 220, LAN router 230, and fiber optic receiver 240 as housed within the containment building of a nuclear power plant, designated by their placement to the left of containment structure wall 250. Further, FIG. 2 depicts single mode fiber 245 spanning across containment structure wall 250 and enabling communication with fiber optic transmitter 260, which is located outside of the containment building. In this example, single mode fiber 245 may extend up to approximately 3.22 km (2 miles) in length without losing signal quality or speed, allowing fiber optic transmitter 260 and cellular router 270 to be located well outside the containment building if required.

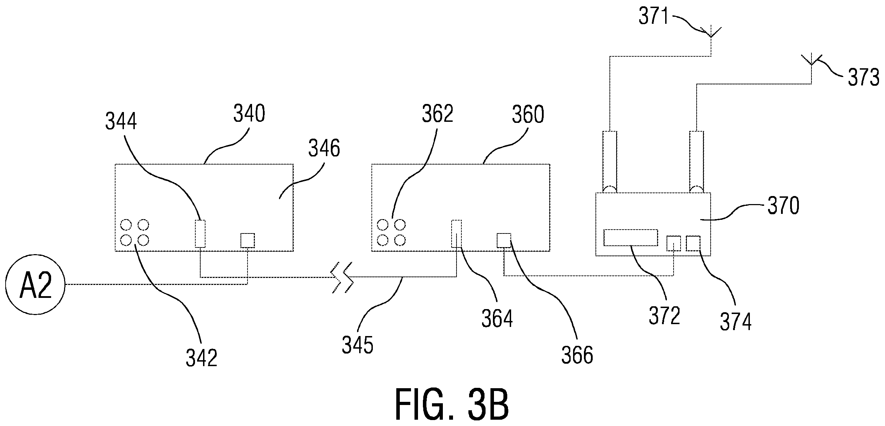

Fiber optic transmitter 260 receives signals from fiber optic receiver 240 at single mode connection 264 and converts those signals back to an Ethernet format for further transmission to work station cellular router 270 via Ethernet connection 266. As a result, work station cellular router 270 receives data related to robot weld head 104 (including any data from cameras mounted on robot weld head 104), robot controller 204, weld power supply 206, and headset 208 via LAN connection 274. Further, using high gain antennas 271 and 273, work station cellular router 270 is configured to send and receive data related to robot weld head 104, robot controller 204, weld power supply 206, and headset 208 via cellular communication to a remotely located operator station cellular router 370, as depicted in FIG. 3B.

Cellular routers 270 and 370 are configured to enable wireless communication of data related to the operation of robot weld head 104 using a secure cellular network connection. In various embodiments of the present disclosure, the cellular routers are able to detect the signal strength of cellular networks from multiple network providers. The signal strength may be displayed on signal strength indicators 272 and 372. Further, the cellular routers 270 and 370 may be programmed to select and utilize a preferred cellular network. Alternatively, cellular routers 270 and 370 may be programmed to automatically select the cellular network with the strongest combined signal, or strongest signal at either of the individual router locations. Yet further, cellular routers 270 and 370 may be configured to allow for connection to multiple cellular networks concurrently to improve bandwidth reliability and effectively increase the data transfer throughput.

Cellular routers 270 and 370 may be further configured to automatically switch cellular networks in the case of a signal loss with the initial or preferred network. This beneficially allows critical operator control of the robot weld head 104 or other automated equipment to continue in the case of a signal loss. Further, cellular routers 270 and 370 may be programmed to continue using the alternate cellular network when connection with the initial or preferred network is reestablished. Alternatively, cellular routers 270 and 370 may be programmed to switch back to the initial or preferred network. Cellular routers 270 and 370 may be implemented using Cradlepoint or similar cellular router technology.

In the case of a complete signal loss among all available cellular networks, robot weld head 104 and/or robot controller 204 may be configured to safely pause operations. This may be implemented using a watchdog timer that detects the signal interruption and triggers the robot weld head 104 to automatically downslope and maintain a safe state. Alternately, the work site location may be equipped with a local operator station. In this case, a watchdog timer may be used to detect a signal loss that then causes control to switch from the remote operator station to a local operator station where an onsite operator can continue welding operations. A second watchdog timer may be implemented that causes the robot weld head 104 to automatically downslope and maintain a safe state if no onsite operator establishes control of the local operator station.

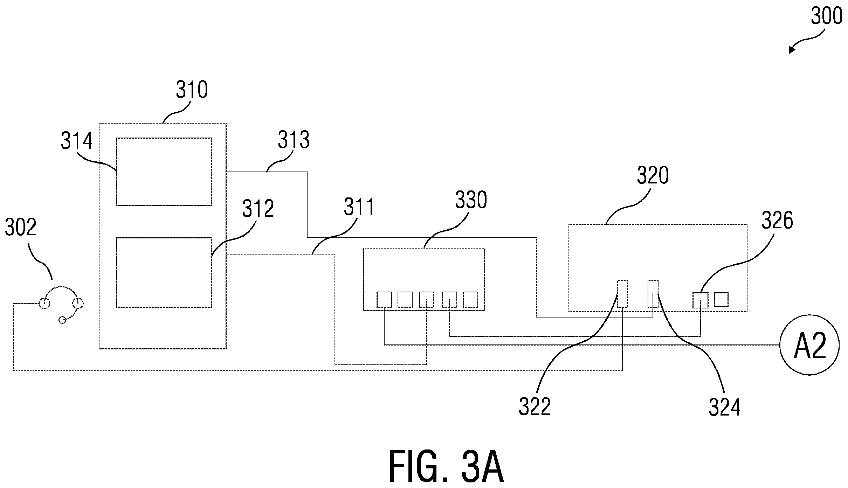

Referring now to FIG. 3A and FIG. 3B, a block diagram of operator station 300 configured for wireless control of automated equipment is depicted in accordance with at least one non-limiting aspect of the present disclosure. FIG. 3A and FIG. 3B are intended to be viewed together. FIG. 3A joins with FIG. 3B as indicated by connection point A2. First referring to FIG. 3B, operator station 300 includes operator station cellular router 370. As described above, operator station cellular router 370 is configured to wirelessly communicate with work station cellular router 270. Via high gain antennas 371 and 373, cellular router 370 transmits and receives data related to the operation of robot weld head 104 using a secure cellular network connection.

Operator station cellular router 370 communicates data related to robot weld head 104, robot controller 204, welding power supply 206, and headset 208 to fiber optic transmitter 360 via LAN connection 374. Signals are transmitted between operation station cellular router 370 and fiber optic transmitter 360 using an Ethernet protocol. Fiber optic transmitter 360 receives signals from cellular router 370 via Ethernet connection 366 and transmits those signals from single mode connection 364, via single mode fiber 345, to fiber optic receiver 340. Fiber optic receiver 340 receives the signals at single mode connection 344. Fiber optic transmitter 360 may include a video input 362 and Fiber optic receiver 340 may include a video input 342. Communication via single mode fiber 345 enables fiber optic transmitter 360 and operator station cellular router 370 to be at a location distant from other components of operator station 300. For example, operator console 310 may be beneficially located in an inside office while cellular router is placed at a distant location with stronger cellular signal compared to inside the office. In this example, single mode fiber 345 may extend up to approximately 3.22 km (2 miles) in length without losing signal quality or speed.

Referring not to FIG. 3A and FIG. 3B, fiber optic receiver 340 converts signals received from fiber optic transmitter 360 back to an Ethernet format for further transmission to LAN router 330 via Ethernet connection 346. LAN router 330 is configured to route communication between different components of operator station 300 by detecting each component's individual IP address. LAN router 330 may be implemented using an UNMS EdgeRouter or similar Ethernet router technology. In the embodiment disclosed in FIG. 3A, LAN router 330 is configured to route Ethernet signals from fiber optic receiver 340 to video decoder 320 and operator console 310. In other embodiments, LAN router 330 may be configured to route Ethernet signals directly from operator station cellular router 370 to video decoder 320 and operator console 310.

The Ethernet signals routed to video decoder 320 carry data related to video signals generated by the one or more cameras included in robot weld head 104. Data related to audio captured by headset 208 is also routed to video decoder 320. As described above, in other embodiments, automated equipment other than robot weld head 104 may be implemented. Data related to video signals generated by one or more cameras included in this alternate automated equipment may also be routed to video decoder 320. Video decoder 320 receives these Ethernet signals at Ethernet LAN connection 326. The video data received by video decoder 320 is converted to high definition multimedia interface (HDMI) format and transmitted from HDMI connection 324 to operator console 310 via HDMI cable 313. The audio data received by video decoder is transmitted from audio connection 322 to headset 302.

Operator console 310 receives the video signal generated by the one or more cameras included in robot weld head 104. Video monitor 314 is included in operator console 310 and is configured to display one or more video images based on the video signal. This enables video monitor 314 to display a real time view of the welding process being executed by robot weld head 104. In other embodiments of the current disclosure, video monitor 314 displays one or more video images based on video signals generated by cameras included in automated equipment other than robot weld head 104. For example, video monitor 314 may display a real time video of automated equipment used in industrial processes for welding, painting, assembly, material handling, pick and place, packaging, labeling, palletizing, product inspection, testing, or other processes related to automated equipment.

The video displayed by video monitor 314 beneficially allows an operator stationed at operator console 310 to view various aspects of the process being executed by robot weld head 104 or other automated equipment in real time and to make decisions based on this view of the process. For example, robot weld head 104 may include one camera configured to monitor a leading edge of the weld puddle and another camera configured to monitor a trailing edge of the weld puddle. An operator looking at a real time view of these cameras is able to monitor the weld puddle, sidewall fusion, filler wire entry position and speed, and/or weld arc characteristics. Further, based on the real time video, the operator is able to identify where critical parameter adjustments controlling the filler wire feed rate, filler wire positioning, tungsten positioning, and/or the speed and positioning of the weld arm are needed in order to correct and improve the quality of the weld. The operator may also wear a headset 302 that receives audio from work station 200. Using headset 302, the operator is able to hear critical information about the process being executed at work station 200 and/or communicate with another operator located at work station 200 wearing headset 208.

Referring again to FIG. 3A, operator console 310 further includes human machine interface (HMI) 312. Operator console 310 receives the Ethernet signal routed by LAN router 330 that carries information related to the operations of robot weld head 104. This may include, for example, data related to robot weld head 104, robot controller 204, and welding power supply 206. This Ethernet signal is transmitted via Ethernet cable 311. In other embodiments of the current disclosure, operator console 310 receives an Ethernet signal routed by LAN router 330 that carries information related to automated equipment other than robot weld head 104. The HMI 312 included in operator console 310 enables an operator to interact with the system by monitoring and controlling operating parameters in order to modify the operations executed by robot weld head 104 or other automated equipment.

In various aspects of the current disclosure, HMI 312 may include a touchscreen and/or a joystick to facilitate operator control. In one exemplary canister welding process, the operator begins by selecting the specific type of welding operation to be performed using HMI 312. This causes automated programming associated with the selected welding operation to be loaded by, for example, robot controller 204 and/or operator console 310. Using HMI 312, the operator may also adjust various setup parameters based on the condition of the canister or the required welding specifications. Next, to initiate the welding process, the operator commands robot weld head 104 to move to a start position and begin welding. During welding, movements of robot weld head 104 are monitored by one or more cameras mounted to robot weld head 104 and displayed by video monitor 314 in real time. Using video monitor 314, the operator monitors weld puddle characteristics, sidewall fusion, and welding arc characteristics in order to make on-the-fly adjustments to operating parameters controlling the filler wire feed rate, filler wire positioning, tungsten positioning, and/or the speed and positioning of the weld arm, as needed.

The operator interaction described herein is critical to maintain weld quality. Moreover, operations controlled by the operator are not predetermined and require human monitoring and adjustment in order to achieve the desired weld characteristics. For example, the operator may adjust parameters related to the filler wire feed rate and/or positioning in order to control the filler wire entry into the weld puddle. The operator may also adjust parameters related to the tungsten positioning in order to control the weld arc and maintain certain characteristics that impact weld penetration and deposition. The operator may also adjust parameters related to the position and movement of the robot weld head 104 in order to steer a robot arm of robot weld head 104. The adjustments to parameters that control these operations may be made using the touchscreen and/or joystick included in HMI 312. In various embodiments, HMI 312 includes a remote, tactical, hand-held joystick of control pendant.

Operator console 310 may also be configured with biometric monitors of sensors. For example, in order for an operator to gain control over HMI 312, he or she may be required to unlock the system via facial recognition or fingerprint identification. Operator console 310 may also have a quality assurance / quality control *(QA*/*QC)* audit feature. For example, the operator's supervisor may be able to remotely view the operator's control selections in real time or based on stored data. This beneficially allows the supervisor to ensure that various operators at different locations are maintaining consistent quality. Also, the supervisor may be able to download weld schedules, error logs, and diagnostic information to assist with troubleshooting or performance management.

It should be noted that the communications described herein are sometimes referred to in the context of either transmitting or receiving a signal. However, these terms are not intended to limit the directionality of the communications. Throughout this disclosure, it should be understood that any component of work station 200 and operator station 300 that is described as transmitting a signal may also receive a signal. Similarly, any component of work station 200 and operator station 300 that is described as receiving a signal may also transmit a signal. For example, data related to the operation of robot weld head 104 is both transmitted and received by operator console 310. Similarly, data related to the operation of robot weld head 104 is both transmitted and received by PLC 210.

Various examples described above utilize wireless communications over a secure cellular network to transfer information between HMI 312, video monitor 314, PLC 210, robot weld head 104, robot controller 204, and welding power supply 206. This communication protocol enables what may be described as "man controlled automation" or "augmented automation"- the ability to operate complex equipment as an extension of human sensing and manipulating capability, allowing the operator to instantaneously or nearly instantaneously observe and make immediate adjustments and/or corrections to an otherwise automated process performing operations based on predetermined programming.

Moreover, various aspects of the present disclosure enable this type of augmented automation process to occur remotely through wireless communication. For example, an operator can remotely control an automated process that is being executed in a restricted area, such as welding the lid on a spent fuel canister in the containment building of a nuclear power plant, without having to be present onsite. Allowing this type of remote operation beneficially increases safety, efficiency, and has the potential for significant cost savings. A normal spent fuel canister welding operation may require a supervisor, two welding operators and a maintenance technician, all of whom would typically be required to be onsite. Implementing various aspects of the present disclosure, only one or two workers would be needed onsite to set up and maintain the equipment. The others could control the welding operations remotely, thereby saving the project several thousands of dollars in mobilization fees plus living expenses. Further, the various aspect of the present disclosure beneficially enable the remote control of automated processes without exposing operators to hazardous environments.

The present disclosure has been described with reference to various exemplary and illustrative aspects. The aspects described herein are understood as providing illustrative features of varying detail of various aspects of the present disclosure; and therefore, unless otherwise specified, it is to be understood that, to the extent possible, one or more features, elements, components, constituents, ingredients, structures, modules, and/or aspects of the disclosed aspects may be combined, separated, interchanged, and/or rearranged with or relative to one or more other features, elements, components, constituents, ingredients, structures, modules, and/or aspects of the disclosed aspects without departing from the scope of the present disclosure. Accordingly, it will be recognized by persons having ordinary skill in the art that various substitutions, modifications or combinations of any of the exemplary aspects may be made without departing from the scope of the present disclosure. In addition, persons skilled in the art will recognize, or be able to ascertain using no more than routine experimentation, many equivalents to the various aspects of the present disclosure upon review of this specification. Thus, the present disclosure is not limited by the description of the various aspects, but rather by the claims.

Those skilled in the art will recognize that, in general, terms used herein, are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present.

It is worthy to note that any reference to "one aspect," "an aspect," "an exemplification," "one exemplification," and the like means that a particular feature, structure, or characteristic described in connection with the aspect is included in at least one aspect. Thus, appearances of the phrases "in one aspect," "in an aspect," "in an exemplification," and "in one exemplification" in various places throughout the specification are not necessarily all referring to the same aspect. Furthermore, the particular features, structures or characteristics may be combined in any suitable manner in one or more aspects.

As used herein, the singular form of "a", "an", and "the" include the plural references unless the context clearly dictates otherwise.

The terms "about" or "approximately" as used in the present disclosure, unless otherwise specified, means an acceptable error for a particular value as determined by one of ordinary skill in the art, which depends in part on how the value is measured or determined. In certain aspects, the term "about" or "approximately" means within 1, 2, 3, or 4 standard deviations. In certain aspects, the term "about" or "approximately" means within 50%, 200%, 105%, 100%, 9%, 8%, 7%, 6%, 5%, 4%, 3%, 2%, 1%, 0.5%, or 0.05% of a given value or range.

In this specification, unless otherwise indicated, all numerical parameters are to be understood as being prefaced and modified in all instances by the term "about," in which the numerical parameters possess the inherent variability characteristic of the underlying measurement techniques used to determine the numerical value of the parameter. At the very least, each numerical parameter described herein should at least be construed in light of the number of reported significant digits and by applying ordinary rounding techniques.

The terms "comprise" (and any form of comprise, such as "comprises" and "comprising"), "have" (and any form of have, such as "has" and "having"), "include" (and any form of include, such as "includes" and "including") and "contain" (and any form of contain, such as "contains" and "containing") are open-ended linking verbs. As a result, a system that "comprises," "has," "includes" or "contains" one or more elements possesses those one or more elements, but is not limited to possessing only those one or more elements. Likewise, an element of a system, device, or apparatus that "comprises," "has," "includes" or "contains" one or more features possesses those one or more features, but is not limited to possessing only those one or more features.

## Claims

1. A system for the remote control of automated equipment comprising:
automated equipment (104) configured to execute a process in a nuclear containment building by performing operations based on predetermined programming;
a first cellular router (270) communicatively coupled to the automated equipment (104), wherein the first cellular router (270) is located outside the nuclear containment building;
a second cellular router (370) located remotely from the first cellular router (270);
an operator console (310) communicatively coupled to the second cellular router (370), the operator console (310) comprising a human machine interface (HMI) that enables an operator to modify the operations of the automated equipment (104) in real time by changing operating parameters of the predetermined programming, wherein the changing of the operating parameters is communicated between the operator console (310) and the automated equipment (104);
**characterized in that**
the nuclear containment building prevents transmission of a wireless signal from within the nuclear containment building to outside the nuclear containment building; and
the second cellular router (370) is configured to communicate with the first cellular router (270) using a cellular network.

2. The system of claim 1 wherein the automated equipment (104) comprises at least one camera configured to monitor the process and generate a video signal; and
wherein the operator console (310) comprises a video monitor (314) that displays a real time view of the process based on the video signal, and wherein the real time view of the process is usable by the operator to assist the operator when making decisions while changing the operating parameters.

3. The system of claim 2 further comprising:
a programmable logic controller (PLC) (210) communicatively coupled to the automated equipment (104), the PLC (210) configured to enable communication of the operating parameters via ethernet; the PLC (210) further comprising a video switcher (212) communicatively coupled to the at least one camera, the video switcher configured to receive the video signal generated by the at least one camera;
a video encoder (220) communicatively coupled to the video switcher (212), the video encoder (220) configured to receive the video signal from the video switcher and enable communication of the video signal via ethernet;
a first LAN router (230) communicatively coupled to the PLC (210), the video encoder (220), and the first cellular router (270), the first LAN router configured to route ethernet communications between the PLC (210), the video encoder (220), and the first cellular router (270);
a second LAN router (330) communicatively coupled to the second cellular router (370), the operator console (310), and a video decoder (320), the second LAN router (330) configured to route ethernet communications between the second cellular router (370), the operator console (310), and the video decoder (320);
wherein the video decoder (320) is communicatively coupled to the video monitor (314), the video decoder (320) configured to receive communication of the video signal from the second LAN router (330) via ethernet and transmit the video signal to the video monitor (314) via HDMI.

4. The system of claim 3 further comprising:
a fiber optic receiver (240) communicatively coupled to the first LAN router (230), the fiber optic receiver (240) located within the nuclear containment building; and
a fiber optic transmitter (260) communicatively coupled to the first cellular router (270), the fiber optic transmitter (260) located outside the nuclear containment building;
wherein the fiber optic receiver (240) and the fiber optic transmitter (260) enable communication from within the nuclear containment building to outside the nuclear containment building via a fiber optic cable (245).

5. The system of any one of claims 2 to 4 wherein the automated equipment (104) comprises a robot weld head (104); wherein the process is a welding process, such as welding a lid (102) on a spent fuel canister (100).

6. The system of claim 5 wherein the real time view of the process includes a view of a weld puddle.

7. The system of claim 6 wherein the operations modified by the operator include at least one of:
manipulating a positioning of a weld wire to control a weld puddle;
adjusting a feed rate of the weld wire to control the weld puddle;
adjusting a tungsten positioning to control the welding arc; or
steering the robot weld head.

8. The system of any one of claims 2 to 7 wherein the first cellular router (270) and the second cellular router (370) are further configured to detect multiple cellular networks; and
wherein the first cellular (270) router and the second cellular router (370) automatically communicate using an alternate cellular network of the multiple cellular networks when there is a signal loss at either of the cellular routers, the automated equipment (104) optionally being configured to enter a safe state when there is a signal loss for all of the multiple cellular networks.

9. A method for the remote control of automated equipment (104) comprising:
executing a process in a nuclear containment building using automated equipment (104) configured to perform operations based on predetermined programming;
communicating operating parameters of the predetermined programming between an operating console (310) and the automated equipment (104), the operating console comprising a Human Machine Interface (HMI) (312);
wherein a first cellular router (270) is communicatively coupled to the automated equipment (104), the first cellular router (270) located outside the nuclear containment building;
wherein a second cellular router (370) is communicatively coupled to the operating console (310), the second cellular router (370) located remotely from the first cellular router (270);
**characterized in that**
the nuclear containment building prevents transmission of a wireless signal from within the nuclear containment building to outside the nuclear containment building; and
the first cellular router (270) is configured to communicate with the second cellular router (370) using a cellular network; and
the method includes modifying, by an operator using the **HMI** (312), the operations of the automated equipment (104) in real time by changing the operating parameters that are communicated between the operator console (310) and the automated equipment (104).

10. The method of claim 9 further comprising:
monitoring the process in the nuclear containment building using at least one camera comprised in the automated equipment (104) and generating a video signal based on the monitored process; and
displaying a real time view of the process on a video monitor (314) comprised in the operator console (310) based on the video signal;
wherein the real time view of the process is used by the operator to assist the operator when making decisions while changing the operating parameters.

11. The method of claim 10 further comprising:
communicating the operating parameters between a programmable logic controller (PLC) (210) and a first LAN router (230), wherein the PLC (210) is communicatively coupled to the automated equipment (104), the PLC (210) configured to enable communication of the operating parameters via ethernet;
receiving, by a video switcher (212) comprised in the PLC (210), the video signal from the at least one camera and transmitting, by the video switcher (212), the video signal to a video encoder (220);
transmitting, by the video encoder (220), the video signal to the first LAN router (230), the video encoder (220) configured to enable communication of the video signal via ethernet;
routing, by the first LAN router (230), ethernet communications between the PLC (210), the video encoder (220), and the first cellular router (270);
routing, by a second LAN router (330), ethernet communications between the second cellular router (370), the operator console (310), and a video decoder (320);
receiving, by the video decoder (320), the video signal via ethernet and transmitting, by the video decoder (320), the video signal to the video monitor (314) via HDMI.

12. The method of claim 11 further comprising communicating from within the nuclear containment building to outside the nuclear containment building via a fiber optic cable (245);
wherein a fiber optic receiver (240) is communicatively coupled to the first LAN router (230), the fiber optic receiver (240) located within the nuclear containment building; and
wherein a fiber optic transmitter (260) is communicatively coupled to the first cellular router (270), the fiber optic transmitter (260) located outside the nuclear containment building.

13. The method of any one of claims 10 to 12 wherein the automated equipment (104) comprises a robot weld head (104); and wherein the process is a welding process, such as welding a lid (102) on a spent fuel canister (100).

14. The method of claim 13 wherein
- the real time view of the process includes a view of a weld puddle; or
- the real time view of the process includes a view of a weld puddle and modifying the operations of the automated equipment includes at least one of:
manipulating a positioning of a weld wire to control a weld puddle;
adjusting a feed rate of the weld wire to control the weld puddle;
adjusting a tungsten positioning to control the welding arc; or
steering the robot weld head.

15. The method of any one of claims 10 to 14 further comprising:
detecting, by the first cellular router (270) and the second cellular router (370), multiple cellular networks; and
automatically communicating using an alternate cellular network of the multiple cellular networks when there is a signal loss at either of the cellular routers, and optionally causing the automated equipment (104) to enter a safe state when there is a signal loss for all of the multiple cellular networks.

## Patentansprüche

1. System zur Fernsteuerung einer automatisierten Ausrüstung, umfassend:
eine automatisierte Ausrüstung (104), die konfiguriert ist, um einen Prozess in einem nuklearen Sicherheitsbehälter durch Ausführen von Vorgängen auf Grundlage einer vorbestimmten Programmierung auszuführen;
einen ersten Mobilfunkrouter (270), der mit der automatisierten Ausrüstung (104) kommunikativ gekoppelt ist, wobei sich der erste Mobilfunkrouter (270) außerhalb des nuklearen Sicherheitsbehälters befindet;
einen zweiten Mobilfunkrouter (370), der sich entfernt von dem ersten Mobilfunkrouter (270) befindet;
eine Bedienerkonsole (310), die mit dem zweiten Mobilfunkrouter (370) kommunikativ gekoppelt ist, die Bedienerkonsole (310) umfassend eine Mensch-Maschine-Schnittstelle (HMI), die es einem Bediener ermöglicht, die Vorgänge der automatisierten Ausrüstung (104) in Echtzeit durch Ändern von Betriebsparametern der vorbestimmten Programmierung zu modifizieren, wobei das Ändern der Betriebsparameter zwischen der Bedienerkonsole (310) und der automatisierten Ausrüstung (104) kommuniziert wird;
**dadurch gekennzeichnet, dass**
der nukleare Sicherheitsbehälter die Übertragung eines drahtlosen Signals aus dem Inneren des nuklearen Sicherheitsbehälters nach außerhalb des nuklearen Sicherheitsbehälters verhindert; und
der zweite Mobilfunkrouter (370) konfiguriert ist, um unter Verwendung eines Mobilfunknetzes mit dem ersten Mobilfunkrouter (270) zu kommunizieren.

2. System nach Anspruch 1, wobei die automatisierte Ausrüstung (104) mindestens eine Kamera umfasst, die konfiguriert ist, um den Prozess zu überwachen und ein Videosignal zu erzeugen; und
wobei die Bedienerkonsole (310) einen Videomonitor (314) umfasst, der auf Grundlage des Videosignals eine Echtzeitansicht des Prozesses anzeigt, und wobei die Echtzeitansicht des Prozesses durch den Bediener verwendet werden kann, um den Bediener bei der Entscheidungsfindung während des Änderns der Betriebsparameter zu unterstützen.

3. System nach Anspruch 2, ferner umfassend:
eine speicherprogrammierbare Steuerung (PLC) (210), die mit der automatisierten Ausrüstung (104) kommunikativ gekoppelt ist, wobei die PLC (210) konfiguriert ist, um eine Kommunikation der Betriebsparameter über Ethernet zu ermöglichen; die PLC (210) ferner umfassend einen Videoumschalter (212), der mit der mindestens einen Kamera kommunikativ gekoppelt ist, wobei der Videoumschalter konfiguriert ist, um das von der mindestens einen Kamera erzeugte Videosignal zu empfangen;
einen Videocodierer (220), der mit dem Videoumschalter (212) kommunikativ gekoppelt ist, wobei der Videocodierer (220) konfiguriert ist, um das Videosignal von dem Videoumschalter zu empfangen und eine Kommunikation des Videosignals über Ethernet zu ermöglichen;
einen ersten LAN-Router (230), der mit der PLC (210), dem Videocodierer (220) und dem ersten Mobilfunkrouter (270) kommunikativ gekoppelt ist, wobei der erste LAN-Router konfiguriert ist, um Ethernet-Kommunikationen zwischen der PLC (210), dem Videocodierer (220) und dem ersten Mobilfunkrouter (270) zu leiten;
einen zweiten LAN-Router (330), der mit dem zweiten Mobilfunkrouter (370), der Bedienerkonsole (310) und einem Videodecodierer (320) kommunikativ gekoppelt ist, wobei der zweite LAN-Router (330) konfiguriert ist, um Ethernet-Kommunikationen zwischen dem zweiten Mobilfunkrouter (370), der Bedienerkonsole (310) und dem Videodecodierer (320) zu leiten;
wobei der Videodecodierer (320) mit dem Videomonitor (314) kommunikativ gekoppelt ist, wobei der Videodecodierer (320) konfiguriert ist, um eine Kommunikation des Videosignals von dem zweiten LAN-Router (330) über Ethernet zu empfangen und das Videosignal an den Videomonitor (314) über HDMI zu übertragen.

4. System nach Anspruch 3, ferner umfassend:
einen faseroptischen Empfänger (240), der mit dem ersten LAN-Router (230) kommunikativ gekoppelt ist, wobei sich der faseroptische Empfänger (240) innerhalb des nuklearen Sicherheitsbehälters befindet; und
einen faseroptischen Sender (260), der mit dem ersten Mobilfunkrouter (270) kommunikativ gekoppelt ist, wobei sich der faseroptische Sender (260) außerhalb des nuklearen Sicherheitsbehälters befindet;
wobei der faseroptische Empfänger (240) und der faseroptische Sender (260) eine Kommunikation aus dem Inneren des nuklearen Sicherheitsbehälters nach außerhalb des nuklearen Sicherheitsbehälters über ein faseroptisches Kabel (245) ermöglichen.

5. System nach einem der Ansprüche 2 bis 4, wobei die automatisierte Ausrüstung (104) einen Roboterschweißkopf (104) umfasst; wobei der Prozess ein Schweißprozess ist, wie beispielsweise das Schweißen eines Deckels (102) auf einen Behälter für abgebrannte Brennelemente (100).

6. System nach Anspruch 5, wobei die Echtzeitansicht des Prozesses eine Ansicht eines Schweißbads einschließt.

7. System nach Anspruch 6, wobei die durch den Bediener modifizierten Vorgänge mindestens eines von Folgendem einschließen:
Manipulieren einer Positionierung eines Schweißdrahts, um ein Schweißbad zu steuern;
Anpassen einer Vorschubgeschwindigkeit des Schweißdrahts, um das Schweißbad zu steuern;
Anpassen einer Wolframpositionierung, um den Schweißlichtbogen zu steuern; oder
Steuern des Roboterschweißkopfs.

8. System nach einem der Ansprüche 2 bis 7, wobei der erste Mobilfunkrouter (270) und der zweite Mobilfunkrouter (370) ferner konfiguriert sind, um mehrere Mobilfunknetze zu erkennen; und
wobei der erste Mobilfunkrouter (270) und der zweite Mobilfunkrouter (370) automatisch unter Verwendung eines alternativen Mobilfunknetzes der mehreren Mobilfunknetze kommunizieren, wenn an einem der Mobilfunkrouter ein Signalverlust auftritt, wobei die automatisierte Ausrüstung (104) gegebenenfalls konfiguriert ist, um in einen sicheren Zustand einzutreten, wenn für alle der mehreren Mobilfunknetze ein Signalverlust auftritt.

9. Verfahren zur Fernsteuerung einer automatisierten Ausrüstung (104), umfassend:
Ausführen eines Prozesses in einem nuklearen Sicherheitsbehälter unter Verwendung einer automatisierten Ausrüstung (104), die konfiguriert ist, um Vorgänge auf Grundlage einer vorbestimmten Programmierung auszuführen;
Kommunizieren von Betriebsparametern der vorbestimmten Programmierung zwischen einer Bedienerkonsole (310) und der automatisierten Ausrüstung (104), wobei die Bedienerkonsole eine Mensch-Maschine-Schnittstelle (HMI) (312) umfasst;
wobei ein erster Mobilfunkrouter (270) mit der automatisierten Ausrüstung (104) kommunikativ gekoppelt ist, wobei sich der erste Mobilfunkrouter (270) außerhalb des nuklearen Sicherheitsbehälters befindet;
wobei ein zweiter Mobilfunkrouter (370) mit der Bedienerkonsole (310) kommunikativ gekoppelt ist, wobei sich der zweite Mobilfunkrouter (370) entfernt von dem ersten Mobilfunkrouter (270) befindet;
**dadurch gekennzeichnet, dass**
der nukleare Sicherheitsbehälter die Übertragung eines drahtlosen Signals aus dem Inneren des nuklearen Sicherheitsbehälters nach außerhalb des nuklearen Sicherheitsbehälters verhindert; und
der erste Mobilfunkrouter (270) konfiguriert ist, um unter Verwendung eines Mobilfunknetzes mit dem zweiten Mobilfunkrouter (370) zu kommunizieren; und
das Verfahren das Modifizieren, durch einen die HMI (312) verwendenden Bediener, der Vorgänge der automatisierten Ausrüstung (104) in Echtzeit durch Ändern der Betriebsparameter einschließt, die zwischen der Bedienerkonsole (310) und der automatisierten Ausrüstung (104) kommuniziert werden.

10. Verfahren nach Anspruch 9, ferner umfassend:
Überwachen des Prozesses in dem nuklearen Sicherheitsbehälter unter Verwendung mindestens einer Kamera, die in der automatisierten Ausrüstung (104) umfasst ist, und Erzeugen eines Videosignals auf Grundlage des überwachten Prozesses; und
Anzeigen einer Echtzeitansicht des Prozesses auf einem Videomonitor (314), der in der Bedienerkonsole (310) umfasst ist, auf Grundlage des Videosignals;
wobei die Echtzeitansicht des Prozesses durch den Bediener verwendet wird, um den Bediener bei der Entscheidungsfindung während des Änderns der Betriebsparameter zu unterstützen.

11. Verfahren nach Anspruch 10, ferner umfassend:
Kommunizieren der Betriebsparameter zwischen einer speicherprogrammierbaren Steuerung (PLC) (210) und einem ersten LAN-Router (230), wobei die PLC (210) mit der automatisierten Ausrüstung (104) kommunikativ gekoppelt ist, wobei die PLC (210) konfiguriert ist, um eine Kommunikation der Betriebsparameter über Ethernet zu ermöglichen;
Empfangen, durch einen in der PLC (210) umfassten Videoumschalter (212), des Videosignals von der mindestens einen Kamera und Übertragen, durch den Videoumschalter (212), des Videosignals an einen Videocodierer (220);
Übertragen, durch den Videocodierer (220), des Videosignals an den ersten LAN-Router (230), wobei der Videocodierer (220) konfiguriert ist, um eine Kommunikation des Videosignals über Ethernet zu ermöglichen;
Leiten, durch den ersten LAN-Router (230), von Ethernet-Kommunikationen zwischen der PLC (210), dem Videocodierer (220) und dem ersten Mobilfunkrouter (270);
Leiten, durch einen zweiten LAN-Router (330), von Ethernet-Kommunikationen zwischen dem zweiten Mobilfunkrouter (370), der Bedienerkonsole (310) und einem Videodecodierer (320);
Empfangen, durch den Videodecodierer (320), des Videosignals über Ethernet und Übertragen, durch den Videodecodierer (320), des Videosignals an den Videomonitor (314) über HDMI.

12. Verfahren nach Anspruch 11, ferner umfassend das Kommunizieren aus dem Inneren des nuklearen Sicherheitsbehälters nach außerhalb des nuklearen Sicherheitsbehälters über ein faseroptisches Kabel (245);
wobei ein faseroptischer Empfänger (240) mit dem ersten LAN-Router (230) kommunikativ gekoppelt ist, wobei sich der faseroptische Empfänger (240) innerhalb des nuklearen Sicherheitsbehälters befindet; und
wobei ein faseroptischer Sender (260) mit dem ersten Mobilfunkrouter (270) kommunikativ gekoppelt ist, wobei sich der faseroptische Sender (260) außerhalb des nuklearen Sicherheitsbehälters befindet.

13. Verfahren nach einem der Ansprüche 10 bis 12, wobei die automatisierte Ausrüstung (104) einen Roboterschweißkopf (104) umfasst; und wobei der Prozess ein Schweißprozess ist, wie beispielsweise das Schweißen eines Deckels (102) auf einen Behälter für abgebrannte Brennelemente (100).

14. Verfahren nach Anspruch 13, wobei
- die Echtzeitansicht des Prozesses eine Ansicht eines Schweißbads einschließt; oder
- die Echtzeitansicht des Prozesses eine Ansicht eines Schweißbads einschließt und das Modifizieren der Vorgänge der automatisierten Ausrüstung mindestens eines von Folgendem einschließt:
Manipulieren einer Positionierung eines Schweißdrahts, um ein Schweißbad zu steuern;
Anpassen einer Vorschubgeschwindigkeit des Schweißdrahts, um das Schweißbad zu steuern;
Anpassen einer Wolframpositionierung, um den Schweißlichtbogen zu steuern; oder
Steuern des Roboterschweißkopfs.

15. Verfahren nach einem der Ansprüche 10 bis 14, ferner umfassend:
Erkennen, durch den ersten Mobilfunkrouter (270) und den zweiten Mobilfunkrouter (370), mehrerer Mobilfunknetze; und
automatisches Kommunizieren unter Verwendung eines alternativen Mobilfunknetzes der mehreren Mobilfunknetze, wenn an einem der Mobilfunkrouter ein Signalverlust auftritt, und gegebenenfalls Veranlassen der automatisierten Ausrüstung (104), in einen sicheren Zustand einzutreten, wenn für alle der mehreren Mobilfunknetze ein Signalverlust auftritt.

## Revendications

1. Système pour la commande à distance d'équipement automatisé comprenant :
un équipement automatisé (104) configuré pour exécuter un processus dans un bâtiment de confinement nucléaire en effectuant des opérations sur la base d'une programmation prédéterminée ;
un premier routeur cellulaire (270) couplé en communication à l'équipement automatisé (104), dans lequel le premier routeur cellulaire (270) est situé à l'extérieur du bâtiment de confinement nucléaire ;
un second routeur cellulaire (370) situé à distance du premier routeur cellulaire (270) ;
une console d'opérateur (310) couplée en communication au second routeur cellulaire (370), la console d'opérateur (310) comprenant une interface homme-machine (IHM) qui permet à un opérateur de modifier les opérations de l'équipement automatisé (104) en temps réel en changeant des paramètres de fonctionnement de la programmation prédéterminée, dans lequel le changement des paramètres de fonctionnement est communiquée entre la console d'opérateur (310) et l'équipement automatisé (104) ;
**caractérisé en ce que**
le bâtiment de confinement nucléaire empêche la transmission d'un signal sans fil depuis l'intérieur du bâtiment de confinement nucléaire vers l'extérieur du bâtiment de confinement nucléaire ; et
le second routeur cellulaire (370) est configuré pour communiquer avec le premier routeur cellulaire (270) à l'aide d'un réseau cellulaire.

2. Système selon la revendication 1, dans lequel l'équipement automatisé (104) comprend au moins une caméra configurée pour surveiller le processus et générer un signal vidéo ; et
dans lequel la console d'opérateur (310) comprend un moniteur vidéo (314) qui affiche une vue en temps réel du processus sur la base du signal vidéo, et dans lequel la vue en temps réel du processus est utilisable par l'opérateur pour aider l'opérateur lors de la prise de décisions pendant le changement des paramètres de fonctionnement.

3. Système selon la revendication 2, comprenant en outre :
un contrôleur logique programmable (PLC) (210) couplé en communication à l'équipement automatisé (104), le PLC (210) étant configuré pour permettre la communication des paramètres de fonctionnement par Ethernet ; le PLC (210) comprenant en outre un commutateur vidéo (212) couplé en communication à l'au moins une caméra, le commutateur vidéo étant configuré pour recevoir le signal vidéo généré par l'au moins une caméra ;
un encodeur vidéo (220) couplé en communication au commutateur vidéo (212), l'encodeur vidéo (220) étant configuré pour recevoir le signal vidéo en provenance du commutateur vidéo et permettre la communication du signal vidéo par Ethernet ;
un premier routeur LAN (230) couplé en communication au PLC (210), à l'encodeur vidéo (220), et au premier routeur cellulaire (270), le premier routeur LAN étant configuré pour acheminer des communications Ethernet entre le PLC (210), l'encodeur vidéo (220), et le premier routeur cellulaire (270) ;
un second routeur LAN (330) couplé en communication au second routeur cellulaire (370), à la console d'opérateur (310), et à un décodeur vidéo (320), le second routeur LAN (330) étant configuré pour acheminer des communications Ethernet entre le second routeur cellulaire (370), la console d'opérateur (310), et le décodeur vidéo (320) ;
dans lequel le décodeur vidéo (320) est couplé en communication au moniteur vidéo (314), le décodeur vidéo (320) étant configuré pour recevoir la communication du signal vidéo depuis le second routeur LAN (330) par Ethernet et transmettre le signal vidéo au moniteur vidéo (314) par HDMI.

4. Système selon la revendication 3, comprenant en outre :
un récepteur à fibres optiques (240) couplé en communication au premier routeur LAN (230), le récepteur à fibres optiques (240) étant situé à l'intérieur du bâtiment de confinement nucléaire ; et
un émetteur à fibres optiques (260) couplé en communication au premier routeur cellulaire (270), l'émetteur à fibres optiques (260) étant situé à l'extérieur du bâtiment de confinement nucléaire ;
dans lequel le récepteur à fibres optiques (240) et l'émetteur à fibres optiques (260) permettent la communication depuis l'intérieur du bâtiment de confinement nucléaire vers l'extérieur du bâtiment de confinement nucléaire par l'intermédiaire d'un câble à fibres optiques (245).

5. Système selon l'une quelconque des revendications 2 à 4, dans lequel l'équipement automatisé (104) comprend une tête de soudage robotisée (104) ; dans lequel le processus est un processus de soudage, tel que le soudage d'un couvercle (102) sur une cartouche de combustible irradié (100).

6. Système selon la revendication 5, dans lequel la vue en temps réel du processus comporte une vue d'un bain de fusion.

7. Système selon la revendication 6, dans lequel les opérations modifiées par l'opérateur comprennent au moins l'un parmi :
la manipulation d'un positionnement d'un fil de soudage pour réguler un bain de fusion ;
l'ajustement d'une vitesse d'avance du fil de soudage pour réguler le bain de fusion ;
l'ajustement d'un positionnement de tungstène pour réguler l'arc de soudage ; ou
le guidage de la tête de soudage robotisée.

8. Système selon l'une quelconque des revendications 2 à 7, dans lequel le premier routeur cellulaire (270) et le second routeur cellulaire (370) sont en outre configurés pour détecter de multiples réseaux cellulaires ; et
dans lequel le premier routeur cellulaire (270) et le second routeur cellulaire (370) communiquent automatiquement à l'aide d'un réseau cellulaire alternatif parmi les multiples réseaux cellulaires lorsqu'il y a une perte de signal au niveau de l'un ou l'autre des routeurs cellulaires, l'équipement automatisé (104) étant facultativement configuré pour entrer dans un état de sécurité lorsqu'il y a une perte de signal pour l'ensemble des multiples réseaux cellulaires.

9. Procédé pour la commande à distance d'équipement automatisé (104) comprenant :
l'exécution d'un processus dans un bâtiment de confinement nucléaire à l'aide d'un équipement automatisé (104) configuré pour effectuer des opérations sur la base d'une programmation prédéterminée ;
la communication de paramètres de fonctionnement de la programmation prédéterminée entre une console de commande (310) et l'équipement automatisé (104), la console de commande comprenant une interface homme-machine (IHM) (312) ;
dans lequel un premier routeur cellulaire (270) est couplé en communication à l'équipement automatisé (104), le premier routeur cellulaire (270) étant situé à l'extérieur du bâtiment de confinement nucléaire ;
dans lequel un second routeur cellulaire (370) est couplé en communication à la console de commande (310), le second routeur cellulaire (370) étant situé à distance du premier routeur cellulaire (270) ;
**caractérisé en ce que**
le bâtiment de confinement nucléaire empêche la transmission d'un signal sans fil depuis l'intérieur du bâtiment de confinement nucléaire vers l'extérieur du bâtiment de confinement nucléaire ; et
le premier routeur cellulaire (270) est configuré pour communiquer avec le second routeur cellulaire (370) à l'aide d'un réseau cellulaire ; et
le procédé comporte la modification, par un opérateur à l'aide de l'IHM (312), des opérations de l'équipement automatisé (104) en temps réel en changeant les paramètres de fonctionnement qui sont communiqués entre la console d'opérateur (310) et l'équipement automatisé (104).

10. Procédé selon la revendication 9, comprenant en outre :
la surveillance du processus dans le bâtiment de confinement nucléaire à l'aide d'au moins une caméra comprise dans l'équipement automatisé (104) et la génération d'un signal vidéo sur la base du processus surveillé ; et
l'affichage d'une vue en temps réel du processus sur un moniteur vidéo (314) compris dans la console d'opérateur (310) sur la base du signal vidéo ;
dans lequel la vue en temps réel du processus est utilisée par l'opérateur pour aider l'opérateur lors de la prise de décisions pendant le changement des paramètres de fonctionnement.

11. Procédé selon la revendication 10, comprenant en outre :
la communication des paramètres de fonctionnement entre un contrôleur logique programmable (PLC) (210) et un premier routeur LAN (230), dans lequel le PLC (210) est couplé en communication à l'équipement automatisé (104), le PLC (210) étant configuré pour permettre la communication des paramètres de fonctionnement par Ethernet ;
la réception, par un commutateur vidéo (212) compris dans le PLC (210), du signal vidéo depuis l'au moins une caméra et la transmission, par le commutateur vidéo (212), du signal vidéo à un encodeur vidéo (220) ;
la transmission, par l'encodeur vidéo (220), du signal vidéo au premier routeur LAN (230), l'encodeur vidéo (220) étant configuré pour permettre la communication du signal vidéo par Ethernet ;
le routage, par le premier routeur LAN (230), de communications Ethernet entre le PLC (210), l'encodeur vidéo (220), et le premier routeur cellulaire (270) ;
le routage, par un second routeur LAN (330), de communications Ethernet entre le second routeur cellulaire (370), la console d'opérateur (310), et un décodeur vidéo (320) ;
la réception, par le décodeur vidéo (320), du signal vidéo par Ethernet et la transmission, par le décodeur vidéo (320), du signal vidéo au moniteur vidéo (314) par HDMI.

12. Procédé selon la revendication 11, comprenant en outre la communication depuis l'intérieur du bâtiment de confinement nucléaire vers l'extérieur du bâtiment de confinement nucléaire par l'intermédiaire d'un câble à fibres optiques (245) ;
dans lequel un récepteur à fibres optiques (240) est couplé en communication au premier routeur LAN (230), le récepteur à fibres optiques (240) étant situé à l'intérieur du bâtiment de confinement nucléaire ; et
dans lequel un émetteur à fibres optiques (260) est couplé en communication au premier routeur cellulaire (270), l'émetteur à fibres optiques (260) étant situé à l'extérieur du bâtiment de confinement nucléaire.

13. Procédé selon l'une quelconque des revendications 10 à 12, dans lequel l'équipement automatisé (104) comprend une tête de soudage robotisée (104) ; et dans lequel le processus est un processus de soudage, tel que le soudage d'un couvercle (102) sur une cartouche de combustible irradié (100).

14. Procédé selon la revendication 13, dans lequel
- la vue en temps réel du processus comporte une vue d'un bain de fusion ; ou
- la vue en temps réel du processus comporte une vue d'un bain de fusion et la modification des opérations de l'équipement automatisé comporte au moins l'un parmi :
la manipulation d'un positionnement d'un fil de soudage pour réguler un bain de fusion ;
l'ajustement d'une vitesse d'avance du fil de soudage pour réguler le bain de fusion ;
l'ajustement d'un positionnement de tungstène pour réguler l'arc de soudage ; ou
le guidage de la tête de soudage robotisée.

15. Procédé selon l'une quelconque des revendications 10 à 14, comprenant en outre :
la détection, par le premier routeur cellulaire (270) et le second routeur cellulaire (370), de multiples réseaux cellulaires ; et
la communication automatique à l'aide d'un réseau cellulaire alternatif parmi les multiples réseaux cellulaires lorsqu'il y a une perte de signal au niveau de l'un ou l'autre des routeurs cellulaires, et le fait d'amener facultativement l'équipement automatisé (104) à entrer dans un état de sécurité lorsqu'il y a une perte de signal pour l'ensemble des multiples réseaux cellulaires.
